# EUROPEAN PATENT SPECIFICATION

(11) **EP 2 396 461 B1**
(45) Date of publication and mention of the grant of the patent: **01.05.2013**
(21) Application number: 10704195.6
(22) Date of filing: 03.02.2010
(51) Int. Cl.: D05C 17/02, B60Q 3/00, G08B 5/36, F21V 33/00

(54) **LIGHT TRANSMISSIVE MULTI-LAYER CARPET TILE AND CARPETED FLOOR COMPRISING A LIGHTING SYSTEM AND A PLURALITY OF SUCH CARPET TILES**
LEUCHTEMITTIERENDER MULTISCHICHT-TEPPISCH
TAPIS MULTICOUCHE TRANSMETTANT LA LUMIÈRE

(30) Priority: 10.02.2009 EP 09152472
(43) Date of publication of application: 21.12.2011
(73) Proprietor: Koninklijke Philips Electronics N.V., 5621 BA Eindhoven (NL)
(72) Inventor: VAN HERPEN, Maarten, M., J., W, NL-5656 AE Eindhoven (NL); VERMEULEN, Markus, C., NL-5656 AE Eindhoven (NL)
(74) Representative: Kroeze, Johannes Antonius
(86) International application number: PCT/IB2010/050462
(87) International publication number: WO 2010/092506

(56) References cited:
- EP-A2- 0 261 811
- WO-A1-2009/066215
- WO-A1-2009/066226
- JP-U- 7 041 580
- US-A- 4 737 764

## Description

### FIELD OF THE INVENTION

The invention relates to a multi-layer carpet tile and to a carpeted floor comprising a plurality of such carpet tiles.

### BACKGROUND OF THE INVENTION

Lighting on or in floors is known in the art. EP0323682 for instance describes an apparatus for guiding the occupants of a building along a path of travel within the building which comprises modular carpet tiles which are arranged to cover the floor of the structure, with some of the tiles being signal units having a light-transmissive, molded plastics housing positioned in an opening therein, and having light-emitting diodes positioned in the housing. The light-emitting diodes are energized via an electrical cable, and thereby provide a visually discernable pathway on the floor.

Further, also textiles comprising optical fibers are known in the art. US20070037462 for instance describes a method for manufacturing a distributed optical fibers scrim comprising functional optical fibers, the functional optical fibers scrim thus manufactured, and composites in which an optical fibers scrim is incorporated. This document describes a variety of textile scrims, particularly adhesively bonded non-woven scrim materials, each comprising at least one optical fiber with a continuous path across at least the length or width of the fabric. Such optical fibers scrims may be useful as sensor components (for example, as a detector of breakage, strain, pressure, or torque), as illumination components (for example, in a variety of light-providing applications), or as data-distribution components, either alone or in combination with other materials, such as fabrics, films, foams, and the like.

US4754372 describes an illuminable covering of a textile material having a fibrous face with at least one light source connected to the back of the textile material. A plurality of light-transmissive fibers are connected to the light source and emanate therefrom, with their free end portions terminating adjacent the fibrous face of the textile material for transmitting light thereto when the light source is energized. In an embodiment, the textile material is a floor covering material such as a carpet or rug.

The use of electronic components in for instance carpets is known in the art. WO2007033980 for instance describes such carpet, as well as a method for equipping a carpet with electronic components. In order to create a method which ensures that the electronic components can be applied to the carpet in an efficient and accurately locatable manner, the electronic components that are fixedly joined to a support material are glued to the carpet with the aid of the supports.

US4794373 describes an apparatus for visually guiding the occupants of a structure in a path of travel along the floor within the structure is provided. This apparatus is comprised of a carpet overlying the floor, and a lighting strip positioned underneath the carpet. The lighting strip comprises an elongate ribbon, with a group of laterally spaced-apart electrical conductors encased in and extending longitudinally of the ribbon of sheet material. A series of light-transmissive plastic housings are connected to and arranged longitudinally along a common outer surface of the ribbon of plastic sheet material. Light-emitting means are positioned within each of the housings, and are electrically connected to predetermined ones of the group of electrical conductors encased in the ribbon of sheet material. The carpet has holes extending therethrough which are arranged in a series corresponding to the series of light-transmissive housings on the lighting strip. The housings are positioned in the holes of the carpet so that when the light-emitting means positioned within the housings are energized, a visually discernible pathway appears along the face of the carpet.

### SUMMARY OF THE INVENTION

A disadvantage of many of the prior art is for instance that the light sources or their housing penetrate the carpet. This may be undesired by users for reasons of aesthetics, because there is no "real broadloom" carpet and there may be no constant carpet feel and sight. Additionally cleaning of the system may become more difficult, because the lighting system may need to be cleaned independent of the carpet. Another problem of prior art may be that the cost is too high, and this cost is strongly increased by the housing required for the light sources. Further, it may add to the complexity of the systems, which makes installation of the prior art light sources difficult. Another disadvantage of prior art is that the lighting pattern cannot be changed after the system has been installed.

There is a desire to provide carpets with lighting functions, but there is also a desire to be flexible when arranging the carpet and the lighting on a floor.

The latter is herein provided by using carpet tiles. Additionally, the advantage of carpet tiles is that they do not necessarily need to be glued to the floor, which makes it possible to replace or repair a lighting system that is installed below the carpet tile(s).

Hence, it is an aspect of the invention to provide an alternative carpet tile that may allow lighting functions, an alternative carpet tile with a light source, an alternative carpeted structure, such as a carpeted floor, comprising (a) a lighting system and (b) a plurality of such carpet tiles, which preferably further at least partly obviate one or more of above-described drawbacks.

In a first aspect, the invention provides a light transmissive multi-layer carpet tile (further also indicated as "carpet tile" or "tile") having a carpet tile top face ("pile") and a carpet tile bottom face, the multi-layer carpet tile comprising:
a. a tufted primary backing layer comprising the carpet tile top face and a primary backing layer bottom face;
b. a pre-coat layer, attached to the primary backing layer bottom face; and
c. a tile backing, attached to the pre-coat layer, wherein the tile backing comprises the carpet tile bottom face,
wherein the multi-layer carpet tile comprises a light transmissive carpet tile section having a carpet tile light transmission in the range of preferably 0.5-15 % for light propagating in a direction from the tile backing to the carpet tile top face and having a wavelength in the visible range.

In this way, a robust carpet may be provided, based on state of the art carpet producing processes, but with special attention to the transmissivity when choosing the respective layers and/or layer materials. The multi-layer carpet structure is preferred in order to comply with the requirements for carpet tiles compared with normal carpets.

The pre-coat layer may be needed to comply with requirements for especially tuft bind strength and preferably fire retardance, and the tile backing may be required to comply with requirements in for example total mass per unit area, total squareness and straightness of edges, dimensional stability, curling/doming and damage at cut edge (fraying). Especially for applications with a high degree of wear (for instance offices, schools, hotels, libraries, hospitals, transport vehicles, certain rooms in homes, etc.,) this may be worthwhile.

Further, the use of tiles may be advantageous, since in case a light source may need to be replaced, repaired or removed, only the relevant carpet tile(s) may have to be removed (temporarily).

The indicated transmission range may on the one hand provide enough transmission through the carpet tile, for instance to make the light effect even visible under typical office lighting conditions, especially assuming state of the art LEDs, preferably solid state LEDs, but on the other hand, may substantially prevent visibility of elements (such as for example the light source) under the carpet tile (or other elements under the carpet tile). Visibility of the floor or other elements under the carpet tiles may especially not be desired, because the light source (or other elements, like electric wires, reflective foil, a padding) may no longer be hidden.

Solid state LEDs as light source(s) are especially desired because of their small dimensions. Such light sources with state of the art technique may be less than 1 mm thick, even in the range of about 0.2 mm (excluding a support structure of 0.5-1 mm thickness, such as PCB (printed circuit board), or smaller. When arranging such light source (for example having a total thickness of 1 mm including support structure) on a floor, the carpet tile may be arranged over the light source without substantial influence of the (presence of the) light source on the (local) surface height of the carpet tile and without substantial influence on the (local) touch of the carpet tile. Nevertheless, it may be preferred to take into account the presence of a light source under the carpet tile when producing carpet tiles. Therefore, in an embodiment, the tile backing comprises a recess arranged to be able to at least partially enclose a light source.

However, preferably instead, the tile backing material may also be chosen such that it can (plastically) deform to shape itself over the light source(s) (and/or lighting system, see also below). This may be the case for most of the materials proposed in this application.
Preferably, the total height of the light sources, and even more preferably the total height of the lighting system is at least 1 mm, preferably less, such equal to or less than about 0.7 mm.

Hence, when applying light sources, the carpet tiles may have no recesses and the carpet tiles are arranged over the light sources (or over the lighting system, respectively), or the carpet tiles may have recesses, and the recesses of the carpet tiles are arranged over the light sources, or the light sources, more especially the lighting system, may be comprised by a padding and the carpet tiles are arranged over the padding. Hence, in an embodiment the light sources (or lighting system) have (has) a total height equal to or less than 1 mm, preferably equal to or less than 0.7 mm, such as about 0.3 mm, and the carpeted floor (or optionally another carpeted structure, such as a carpeted wall or carpeted ceiling) does not comprise a padding. In a further embodiment, the light transmissive multi-layer carpet tiles do not comprise recesses. In yet another embodiment, the lighting system is comprised in a padding.

The light source may be separate from the carpet, i.e. the carpet tile may in an embodiment not include a light source. Therefore, some of the embodiments and claims are directed to the carpet tile per se. However, in a specific embodiment, the light source may also be at least partially integrated in the carpet, especially in the tile backing. Therefore, in an embodiment the carpet tile may comprise at least one light source. Such light source may be part of a lighting system (see below), optionally comprising a plurality of light sources. Thus, the invention provides in a specific embodiment the light transmissive multi-layer carpet tile comprising the light source, preferably a (solid state) light emitting diode (LED).

The term "light source" may also refer to a plurality of light sources, such as a plurality of LEDs. Hence, the light source may refer a plurality of light sources. In a specific embodiment, the term "LED" may also refer to a plurality of LEDs. The term "plurality of LEDs" may refer to 2 or more LEDs, especially 2-100,000 LEDs, for instance 2-10,000, like 4-300, such as 16-256. Hence, the carpet tile or the lighting system may comprise a plurality ofLEDs. In general, the carpet tile, or more especially, the lighting system, may comprise 2-10,000 LEDs/m², especially 25-2,500 LEDs/m². Note that the plurality of LEDs may be distributed over a plurality of carpet tiles. For example, a 10 meter corridor in an office might comprise 10 light transmitting carpet tiles with 10 lighting systems, each lighting system comprising around 80 mono-color LEDs outlining an arrow. Therefore, the term "lighting system" may also refer to a plurality of lighting systems. Further, the invention does not exclude that in a carpeted floor (or another carpeted structure) comprising a plurality of carpet tiles arranged on a lighting system comprising a plurality of light sources, not each carpet tile is arranged over one or more light sources.

The light source may comprise any light source, such as a small incandescent lamp or a fiber tip or fiber irregularity (arranged to let light escape from the fiber, which embodiment has the advantage that it is relatively cheap), but may especially comprise a LED (light emitting diode) (as light source). A specific advantage of using LEDs is that they are relatively small and may thereby fit better within the carpet tile (recess) or below. As mentioned before, a total thickness of the lighting system below 1 mm is preferred, and this may only be achieved with LEDs. The term LED may refer to OLEDs, but especially refers to solid state lighting. Unless indicated otherwise, the term LED herein further refers to solid state LEDs. Especially, the light source is part of a lighting system comprising a plurality of light sources. Such lighting system may be integrated in a padding.

The terms "blue light" or "blue emission" especially relate to light having a wavelength in the range of about 410-490 nm. The term "green light" especially relates to light having a wavelength in the range of about 500-570 nm. The term "red light" especially relates to light having a wavelength in the range of about 590-650 nm. The term "yellow light" especially relates to light having a wavelength in the range of about 560-590 nm. The term "light" herein especially relates to visible light, i.e. light having a wavelength selected from the range of about 380-780 nm. Light emanating from the carpet, i.e. from the carpet tile top face, into a space over the carpet is herein also indicated as "carpet light".

In a preferred embodiment, the primary backing layer comprises tufts comprising light reflective material. For example, the primary backing is a nonwoven material through which light brown yarns are tufted, the tufted primary backing having a light transmittance of for example 1-2% without pre-coat layer applied. The use of (reflective) tufts may further enable light outcoupling from the carpet and/or improve light distribution and/or reduce light absorption. The reflectivity may for instance be in the range of 10-40%.

The choice of the materials of the respective layers of the multi layer may further be of relevance for the transmission of the light source light through the carpet tile. In an example, the primary backing layer comprises a material selected from the group consisting of polypropylene (PP), nylon, and jute, especially PP. Further, preferably the pre-coat layer comprises a material selected from the group consisting of a light transmissive latex, a light-transmissive acrylic and light transmissive polyolefin dispersion based material (such as Hypod^{™} from DOW). In order to make the pre-coat light transmissive it should preferably be substantially free from light scattering or light absorbing particles. If this is not possible (for example due to fire retarding properties of these particles), the amount of filler should preferably be reduced as much as possible. Alternatively, the filler should preferably be replaced with another filler that does not scatter light or scatters light less than state of the art fillers as CaCO₃. This may be achieved for example by choosing a filler that has a similar optical index of refraction compared to the adhesive material. For example, we have found that Al(OH)₃ has a relatively low scattering in combination with latex. We have also found that the use of fillers with a high degree of purity (for example ≥99%) improves the light transmittance (for example, the CaCO₃ fillers typically used in carpeting are known to be brownish in color, due to impurities in the CaCO₃).

The vast majority of carpet tiles that are currently produced are using bitumen or an opaque poly(vinyl chloride) layer as tile backing. These tile backings have no light transmittance and thus another material should be used. Therefore, in a further embodiment, the tile backing comprises a material selected from the group consisting of transmissive poly(vinyl chloride) (PVC) or poly(vinyl butyral) (PVB), silicone rubber, or poly(methyl methacrylate) (PMMA), but alternatively a backing based on polypropylene (PP) or polyethylene (PE) may also be used. All these materials can be used as secondary backing having some flexibility and some light transmittance. Thus, any of these light transmissive materials PVC, PVB, silicone rubber, PMMA, etc, may be applied.

Also the tile backing is preferably substantially free from light scattering or light absorbing fillers. However, in order to comply with standard for carpet tiles it may be necessary to use a filler. Also in these cases, light transmission can be improved using a filler with a similar index of refraction, and using a filler with improved purity. However, the number of suitable fillers is larger for the tile backing, because it does not have as strong fire retarding properties. Therefore transmissive materials such as glass, Al₂O₃, TiO₂, etc., may be used as filler materials (for example choosing the filler material while keeping the index of refraction in mind to prevent too much scattering).

In a specific embodiment of the carpet tile, the primary backing layer comprises polypropylene (or nylon or jute), the pre-coat layer comprises a material selected from the group consisting of light transmissive latex, light-transmissive acrylic and a light transmissive polyolefin dispersion based material, and the tile backing comprises a material selected from the group consisting of transmissive poly(vinyl chloride) (PVC), poly(vinyl butyral) (PVB), silicone rubber, poly(methyl methacrylate) (PMMA), polypropylene (PP) and polyethylene (PE). In this way, a carpet tile may be provided comprising one or more light transmissive carpet tile sections. Therefore, the invention also provides a carpet tile with the herein defined multi-layer structure, wherein the multi-layer carpet tile comprises a carpet tile light transmission in the range of preferably 0.5-15 %, especially 1-10%, for light propagating in a direction from the tile backing to the carpet tile top face and having a wavelength in the visible range. Thus, the term "section", may also refer to a plurality of sections.

Unless indicated otherwise, and where applicable and technically feasible, the phrase "selected from the group consisting" a number of elements may also refer to a combination of two or more of the enumerated elements.

In case a particulate filler material is used in the pre-coat layer and/or the tile backing, the ratio of the index of refraction of the filler material and the pre-coat layer or tile backing, respectively, is (are) preferably in the range of about 0.95-1.05.

Preferably, the primary backing layer is a light transmissive primary backing layer. The adhesive layer or pre-coat layer preferably is a light transmissive pre-coat layer. The tile backing preferably is a light transmissive tile backing (layer). In this way, a carpet tile may be provided that is light transmissive.

The tile backing may be a "secondary backing", such as known in the art. The tile backing may be an adhesive layer.

Note that the term "adhesive layer" herein refers to a layer that adheres (is attached) to another layer, here especially the pre-coat layer. During production, the tile is subjected to processes like curing and/or heating and/or drying, as known in the art, which leads to the formation of a layer which may provide strength and which has substantially no adhesive properties anymore, except for instance the adhesion of the pre-coat layer to the primary backing and the adhesion of the tile backing to the pre-coat layer.

The tile backing may further comprise a scrim. A scrim is a gauze (or mesh) material, such as jute, but may also be made of PP or nylon or fiber glass. Hence, the scrim preferably comprises a textile with a gauze structure (or mesh structure). The scrim may provide further strength to the carpet tile. An advantage of a mesh (or gauze) structures is that light from the light source may relatively easily be transmitted through the meshes (or gauzes). Another advantage is that the improvement in strength by the mesh can allow a further reduction of filler materials in the tile backing.

The type of materials, the specific composition of the materials, the (layer) thicknesses of the materials and the density, height, and color of the tufts may be chosen to provide a tile with the desired carpet tile light transmission. Preferably, the light transmissive carpet tile section has a carpet tile light transmission in the range of 1-10 %. However, the light transmission may even be lower, such as in the range of about 0.5-5 %, like 1-5%. Preferably, the transmission is selected to prevent visibility of an object, such as the floor (or other elements like a light source or lighting system (in the switched off state)), by a viewer viewing the carpet top face of the carpet tile.

In a further aspect, the invention is also related to a carpeted structure, especially a carpeted floor, comprising a plurality of light transmissive multi-layer carpet tiles as described herein.

Such carpeted floor may be arranged on a transparent floor, like a glass floor. In this way, light may be provided from underneath the carpet tiles to the space where the carpeted floor is arranged.

Herein, the invention is further elucidated with respect to carpeted floors as example of a carpeted structure. However, the carpeted structure may also be applied as ceiling carpet or wall carpet. Herein the term "carpeted floor" relates to a floor at least partially covered with a carpet, wherein the carpet comprises a plurality of carpet tiles. Therefore, the term "carpeted floor" refers to a floor at least partially covered with carpet tiles. The term "covered" does not exclude the presence of a light source, or a lighting system, or a padding between the floor and the carpet tile(s).

Especially, a carpeted floor is provided comprising (a) a lighting system comprising a plurality of light sources (arranged on a floor) and (b) a plurality of light transmissive multi-layer carpet tiles arranged on the lighting system. Such carpeted floor may thus be used to provide carpet light, i.e. light emanating from the carpet tiles (when one or more the light source(s) of the lighting system are switched on).

Especially, such carpeted floor may in an embodiment also be used to provide information with carpet light, i.e. especially create a lighting pattern on the floor.

The carpeted floor may further comprise a controller, which may be arranged external from the carpeted floor but which may also be integrated in the carpeted floor, arranged to control the lighting system, and especially the individual light sources of the lighting system. In this way, also information may be provided, like arrows indicating in a specific direction, commercial information. One or more of color, on/off state, intensity, pattern shape and information content of the carpet light may be variable and may be controlled by the controller. Further, one or more of color, on/off state, intensity, pattern shape and information content of the carpet light may be dependent on a sensor signal of a sensor (such as a touch or approach sensor), wherein the sensor is arranged to sense an object on or in the vicinity of the carpeted floor, and wherein the controller is arranged to control or more of color, on/off state, intensity, pattern shape and information content of the carpet light in dependence of the sensor signal. Therefore, in yet another embodiment, the carpeted floor further comprises a sensor, such as a touch or an approach sensor, which may be arranged external from the carpeted floor but which may also be integrated in the carpeted floor.

In yet a further embodiment, the invention provides the carpeted floor in combination with a sensor and the controller, wherein the sensor is arranged to provide a sensor signal when the sensor is approached or touched, and wherein the controller is arranged to control one or more parameters selected from the group consisting of a lighting parameter (such as one or more of color, color distribution, light intensity, light intensity distribution, blinking frequency, etc.) of the carpet light, pattern shape of the carpet light, and information content provided by the carpet light. Patterns or information will in general be provided by a plurality of light sources.

According to yet a further aspect, the invention provides a method for providing a carpeted floor comprising arranging a lighting system on a floor, optionally integrated in a padding and arranging a plurality of carpet tiles over the lighting system.

Examples are also tufted carpet tiles that are used as wall or roof covering. Herein, the "tufted carpet tiles" are also indicated as "carpet tiles".

Terms like "below", "above", "top", and "bottom" relate to positions or arrangements of items which would be obtained when the carpet or carpet tiles are arranged substantially flat on a substantially horizontal surface with the carpet tile bottom face on such surface or on a surface substantially parallel to the substantially horizontal surface. However, this does not exclude the use of the carpet tiles in other arrangements, such as against a wall, or in other (vertical) arrangements.

### BRIEF DESCRIPTION OF THE DRAWINGS

Embodiments of the invention will now be described, by way of example only, with reference to the accompanying schematic drawings in which corresponding reference symbols indicate corresponding parts, and in which:
Figs. 1a-1c schematically depict embodiments and variants of a carpet tile according to the invention; and
Figs. 2a-2c schematically depict embodiments and variants thereof of the carpet tile according to the invention in combination with a light source or a plurality of light sources.

### DESCRIPTION OF PREFERRED EMBODIMENTS

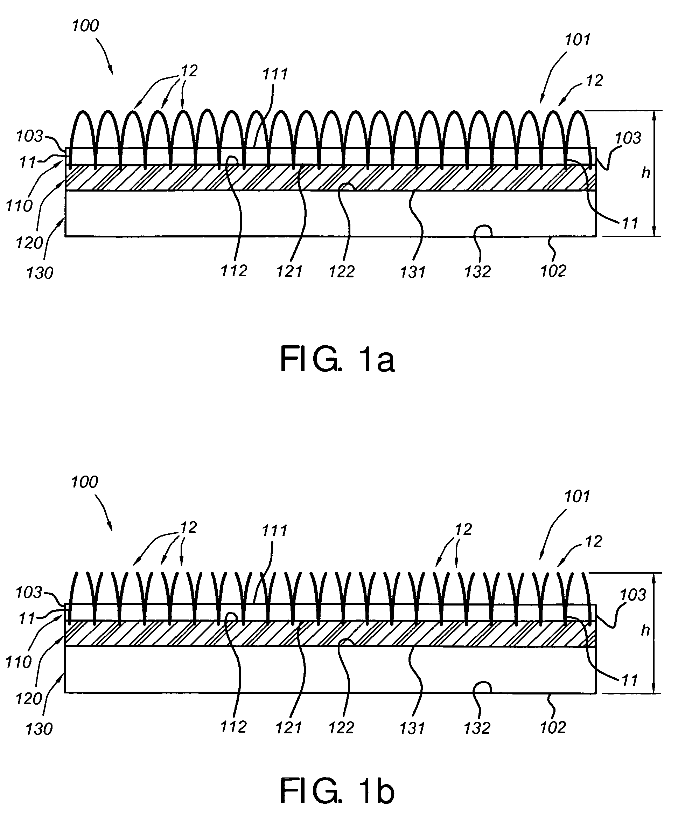

Fig. 1a schematically depicts an embodiment of a light transmissive multi-layer carpet tile 100 having a carpet tile top face 101 and a carpet tile bottom face 102. The multi-layer carpet tile comprising a tufted primary backing layer 110 comprising the carpet tile top face 101 and a primary backing layer bottom face 112. The carpet tile top face is the face or top of the carpet formed by the tufts, indicated with reference 12. The tufts 12 are made of yarns 11. The top face of the primary backing 110 is indicated with reference 111. Through this top face 111 of the primary backing layer 110, the yarns 12 protrude. The yarns 11 penetrate the primary backing layer 110 to form the tufts 12 projecting from the pile surface (i.e. the carpet tile top face 101) on which people can walk, etc.

The yarns 11 are normally loose and need to be adhered with adhesive (from an adhesive layer or pre-coat layer). The adhesive layer which may be present on the backside of the primary backing adheres the tufts to the primary backing layer and holds the tufts 12 in place. The carpet tile 100 (therefore) further comprises a pre-coat layer 120, attached to the primary backing layer bottom face 112. The pre-coat layer 120 is coated to the primary backing layer bottom face 112. In this way, the primary backing layer bottom face 112 and the top face of the thus formed pre-coat layer 120, indicated with reference 121 are adjacent or interwoven (tied together).

The carpet tile 100 further comprises a tile backing 130, attached to the pre-coat layer 120. The tile backing 130 comprises a tile backing top face 131 and a tile backing bottom face 132. The former is adjacent to the pre-coat layer bottom face 122, since the tile backing substantially consists of an adhesive provided to the pre-coat layer bottom face 122. The tile backing 130 comprises the carpet tile bottom face 102. In this embodiment, the tile backing bottom face 132 is the carpet tile bottom face 102.

The carpet tile 100 has a total height h. The edge(s) of the carpet tile 100 are indicated with reference 103.
Fig. 1b is substantially the same as Fig. 1a, but by way of example cut-loop tufts 12 are schematically depicted, whereas in Fig. 1a loop tufts 12 are shown.

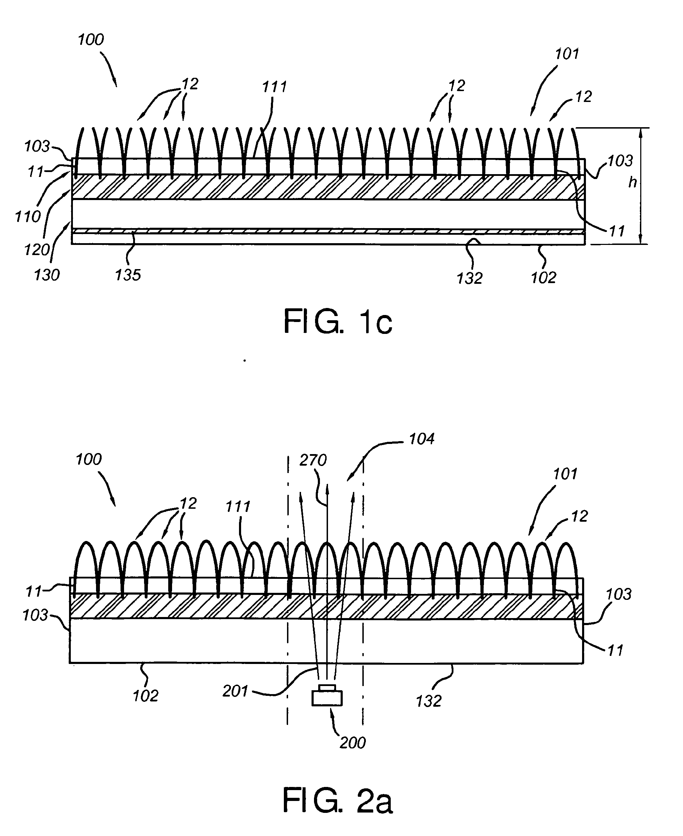

Fig. 1c schematically depicts an embodiment wherein the tile backing 130 further comprises a scrim 135, such as a jute mat. In general, the scrim will be embedded in the adhesive material of the tile backing 130.

The carpet tile 100 may be produced by a method comprising:
- tufting fibers through a light transmissive primary backing (to form a pile);
- applying a light-transmissive pre-coat adhesive coating to the primary backing layer bottom face 112 of the primary backing 110 (thus opposite from the pile), which secures the facing fibers to the primary backing 110 and thereby providing the pre-coat layer 120;
- applying a light-transmissive backing adhesive to the backside of the pre-coat layer 120, i.e. to the pre-coat layer bottom face 122, and optionally the scrim 135, thereby providing the tile backing 130; and
- cutting the carpet in carpet tiles.

A tufted carpet comprises in general a primary backing layer in which tufts are made, typically using nylon, wool, or polypropylene yarns. Subsequently a coating of an adhesive like latex is spread onto the bottom of the carpet in order to lock the tufts in place. This is called the pre-coat (latex) layer. The pre-coat layer 120 provides strength to the tufts (so-called tuft bind strength). Further, the pre-coat layer 120 is used to substantially prevent adhesive from the adhesive layer (see below) penetrate through (the openings between) the tufts in the direction of the carpet tile top face 101.

The pre-coat layer is preferably (as much as possible) free from a light scattering or light absorbing filler material such as calcium carbonate. However, fillers may be needed to achieve the required fire retarding properties. For these purposes fillers may be added, and preferably these fillers are chosen in a low amount and they are chosen with a refractive index as close as possible to the adhesive material. As examples of fire retarding materials, the pre-coat layer 120 may comprise (in addition to the adhesive) one or more materials selected from the group consisting of aluminum trihydrate (Al(OH₃) (ATH)), magnesium oxide (MgO (MDH)), and zinc borate (Zn(BO₃)₂ (ZB)), antimony trioxide (Sb₂O₃ (AO)). In experiments, we have found that especially aluminum trihydrate has a good light transmittance when it is used in combination with latex, due to an acceptable match in the optical index of refraction.

After the pre-coat layer has dried, an additional layer of tile backing adhesive, like the materials mentioned before, is applied (to provide the so-called tile backing or tile backing layer), using methods that are known in the art (for example to apply a PVC backing). Optionally, the scrim 135 (having a gauze structure) may be applied. Typically the scrim 135 is applied onto the uncured tile backing layer, such that the scrim 135 may sink into the tile backing adhesive. The purpose of the scrim 135 is to give the carpet structure extra strength. The tile backing adhesive is subsequently cured (method depends on the type of tile backing material that is used). Thereafter, the carpet may be cut into carpet tiles 100. In this way, a multi-layer carpet tile 100 is provided.

The tile backing 130 may thus be the above mentioned combination of tile backing adhesive layer 120 and scrim 135, but may also be the tile backing adhesive per se. Such scrim 135 in general is embedded in the adhesive layer before curing/drying the adhesive layer to provide the tile backing 130.

A difference between carpets and carpet tiles 100 is that the latter are more stiff or rigid. This is important, because otherwise the carpet tiles would not stay in its place when installed. Typical tile requirements are total mass per unit area (for example >3.5 kg/m² for a loose laid tile), dimensions (for example ±0.3% on nominal dimensions, ±0.2% in the same batch), squareness and straightness of edges (for example ±0.15% in both directions), dimensional stability (for example shrinkage and extension ≤0.2% in both directions), curling/doming (for example max deviation of any part of the sample from its plane ≤ 2mm), and for example no damage at cut edge (fraying). Further, the dimensions of carpet tiles 100 are different from carpets. In general, a carpet tile 100 has a area of 1 m² or less, but typically the area is 0.5m x 0.5m = 0.25 m². Carpet tiles 100 may further be defined as to comply with NEN-EN 1307 (ICS 59.080.60, June 2008), especially Annex A. Further, a common tuft bind strength test is ASTM D1335. Standards from UM44d are 6.25 pound for loop-pile and 3.0 pounds for cut-pile average.

With respect to the carpet tile 100, the packing density of the yarns, the color and length of the yarns, the type of the tile backing 130, and the type of adhesive layer 120, such as between the primary backing layer 110 and the tile backing 130, can be selected to provide a carpet tile 100 that allows transmission of light of a light source 200 arranged below the carpet tile 100.

The carpet tile 100 is especially arranged to be at least partially transmissive. Herein the term "at least partially transmissive" indicates that at least one or more parts of the carpet tile 100 is (are) transmissive (i.e. especially light from one side of the carpet tile 100 (such as the bottom face (see below) of the carpet tile 100) can penetrate through the carpet tile 100, and reach the opposite side of the carpet tile 100 (such as the top face (see below) of the carpet tile 100). Such part is herein indicated as "transmissive carpet tile section", see for instance Fig. 2a. The term "section" is used to indicate that transmission may vary over the carpet tile 100. However, in case the there are no substantial inhomogeneities in the primary backing layer 110, the pre-coat layer 120 and the tile backing 130, respectively, the entire tile 100 may have the herein indicated transmission.

Therefore, the invention especially provides a light transmissive multi-layer carpet tile 100 having a carpet tile top face 101 and a carpet tile bottom face 102, the multi-layer carpet tile comprising (a) a tufted primary backing layer 110 comprising the carpet tile top face 101 and a primary backing layer bottom face 112, (b) a pre-coat layer 120, attached to the primary backing layer bottom face 112; and (c) a tile backing 130, attached to the pre-coat layer 120, wherein the tile backing comprises the carpet tile bottom face 102; wherein the multi-layer carpet tile 100 has a carpet tile light transmission in the range of 0.5-15%, such as 1-10%, for light 201 propagating in a direction from the tile backing 130 to the carpet tile top face 101 and having a wavelength in the visible range.

Fig. 2a schematically an embodiment of the carpet tile 100 such as depicted in Figs. 1a-1c, but with specific reference to the light transmissive properties. The carpet tile 100 comprises at least one transmissive carpet section, indicated with reference 104. A light source 200 is arranged below the carpet tile 100. The light source 200 is arranged to provide light 201, of which at least part may penetrate through the carpet tile 100. Light 201 downstream from the carpet tile 100 is (also) indicated with reference 270, which refers to "carpet light".

Therefore, the multi-layer carpet tile 100 comprises the light transmissive carpet tile section 104 having a carpet tile light transmission, preferably in the range of 0.5-15 %, for light 201 propagating in a direction from the tile backing 130 to the carpet tile top face 101 and having a wavelength in the visible range.

The terms "light transmissive carpet tile section" and "carpet tile light transmission" are especially used to indicate that the light is transmitted through the multi-layer from tile backing 130 to carpet top face 101. The phrase "having a wavelength in the visible range" indicates that at least at one wavelength within the visible wavelength range the transmissive carpet section 104 of carpet tile 100 is transmissive for this wavelength. However, the transmissive carpet section 104 is typically transmissive for a plurality of wavelengths, such as for a wavelength band.

The transmission or light permeability can be determined by providing light at a specific wavelength with a first intensity to the material and relating the intensity of the light at that wavelength measured after transmission through the material, to the first intensity of the light provided at that specific wavelength to the material (see also E-208 and E-406 of the CRC Handbook of Chemistry and Physics, 69th edition, 1088-1989). The terms "permeable for light" or "light permeable" may indicate that at least about 0.5 % of the light is transmitted, more preferably at least about 1 % of the light, through the carpet. Preferably, the transmission is not higher than about 15%, such as up to about 10%.

Transmission is measured of light travelling through the tile backing 130, or at least part of the tile backing 130 in case a recess is present (see also below), through the pre-coat layer 120, and through the tufted primary backing layer 110. The intensity of the light downstream of the carpet tile top face 101 is related to the intensity of the light upstream of the tile backing 130. The light shed on the tile backing 130 for determining transmission is preferably directed on the tile backing 130 (or a recess therein) under normal incidence and the total integrated light emission on the other side of the carpet is measured.

According to a further embodiment of the invention, the adhesive layer (or pre-coat layer) 120 comprises latex. The latex is especially light permeable latex. It is noted that the adhesive layer may substantially consist of latex. The latex may be based on terpolymers of styrene, butadiene and an acidic vinyl monomer. When the adhesive (or pre-coat layer) 120 layer substantially consists of light permeable latex and comprise substantially no light scattering or absorbing particles, the light from the light source(s) may efficiently travel through the adhesive layer. Thus, preferably no light scattering or absorbing fillers are used in the adhesive (or pre-coat layer) 120 and the adhesive layer (or pre-coat layer) 120 is light permeable. Therefore, in an embodiment, the adhesive layer (or pre-coat layer) is free from light scattering or absorbing particles. The phrase "is free from..." and similar phrase or terms especially indicate that something "is substantially free from...". If the pre-coat layer 120 cannot be free from fillers (for example due to fire retarding properties of these particles), the amount of filler should preferably be reduced as much as possible. Alternatively, the filler could be replaced with another filler that does substantially not scatter light. This may be achieved by choosing a filler that has a similar optical index of refraction compared to the adhesive material.

According to a further embodiment of the invention, the adhesive layer (or pre-coat layer) 120 comprises acrylics. The acrylics may be light permeable acrylics. It is noted that the adhesive layer (or pre-coat layer) 120 may substantially consist of acrylics. An example of acrylics is polyacrylate ester. Advantages of acrylics are hardness. Acrylics are also highly resistant to heat, which makes it an especially suitable material for use in combination with LEDs, which generate a relatively large amount of heat. Latex and acrylics may also be used in combination.

In a preferred embodiment a polyolefin dispersion is used as pre-coat layer 120. A suitable polyolefin dispersion may for instance be HYPOD^{™} of Dow Chemical. These are propylene- and ethylene-based dispersions that combine the performance of high-molecular-weight thermoplastics and elastomers with the application advantages of a high-solids waterborne dispersion. Polyolefin dispersions can provide benefits to carpet manufacturers by allowing them to apply a thermoplastic backing using conventional coating equipment. Example are for instance PVB (poly vinyl butyral), or polypropylene. Another suitable polyolefin dispersion may be a PVB-based dispersion. Therefore, in an embodiment, the adhesive layer (or pre-coat layer) preferably comprises one or more of an acrylic adhesive and a polyolefin dispersion adhesive.

The tile backing 130 also comprises an adhesive, coated to the pre-coat layer 120. This adhesive layer may optionally comprise the above mentioned scrim 135. Preferably, the adhesive layer used for the tile backing 130 comprises a material selected from the group consisting of transmissive PVC (poly vinyl chloride), PVB (poly vinyl butyral), silicone rubber, PMMA, PE and PP. Yet even more preferably, the tile backing 130 is selected from the group of a transmissive PVC layer, PVB layer, silicone rubber layer, PMMA layer, PE layer and PP layer. Recently there has been increased interest in new type of backings for carpet tiles, due to a growing demand for sustainable carpet backings, which means that the backing should be easy to recycle and should not harm the environment. It has been shown that it is now possible to make polyolefin backing systems, for example using PE (an example is EcoWorx by Shaw). The polyolefin backing may be very suitable for the current invention. In combination with a polyolefin backing, the invention provides an additional advantage over systems where LEDs are embedded in the carpet tile, because the lighting system can be easily separated from the carpet tile, making recycling easier.

In a specific embodiment of the carpet tile 100, the primary backing layer 110 comprises a material selected from the group consisting of polypropylene, nylon and jute especially PP), the pre-coat layer 120 comprises a material selected from the group consisting of a latex layer, an acrylic layer and a transmissive polyolefin dispersion based layer, and the tile backing 130 comprises a material selected from the group consisting of transmissive PVC (poly vinyl chloride), PVB (poly vinyl butyral), silicone rubber, PMMA, PE and PP.

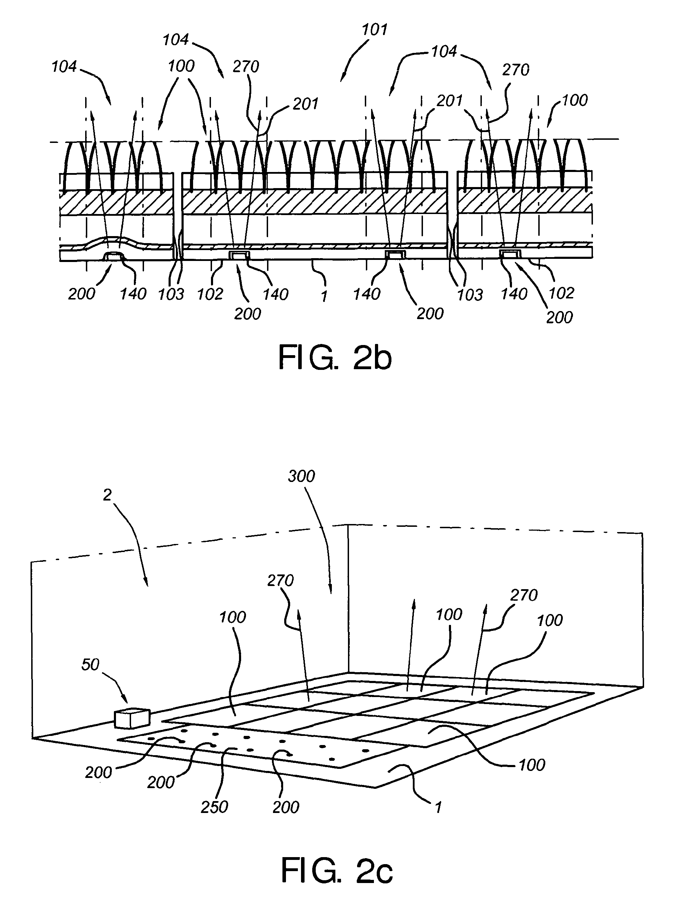

Fig. 2b schematically depicts a plurality of carpet tiles 100, arranged on a floor 1. In this embodiment, most of the carpet tiles 100 have (by way of example) recesses 140 in the carpet bottom face 102, which are in this embodiment (and in general) cavities in the tile backing 130. Preferably, these cavities or recesses 140 do not extend further into the carpet tile 100 than the optional scrim 135, and preferably at least not further than 50% of the thickness of the tile backing layer 130 in order to retain dimensional stability for carpet the tile 100; more preferably, as depicted, the recesses 140 are recesses in the tile backing 130. Hence, light 201 of the light source(s) 200 travel through at least part of the tile backing 130. In case a scrim 135 is comprised by the tile backing 130, preferably, the recess(es) 140 are upstream of the scrim 135 (i.e. light 201 of a light source 200 has to travel through the scrim 135 in the direction of the carpet tile top face 101. By way of example, the left carpet tile 100 has no recess 140. However, the tile backing 130 is able to deform (plastically) and adapts its shape to accommodate the presence of the light source 200 (likewise it may accommodate the presence of a lighting system; see also below), especially when such element as the light source 200, below the carpet tile 100 has a total height equal to or smaller than about 1 mm, such as equal to or smaller than 0.5 mm.

In the embodiment schematically depicted in Fig. 2b, the light sources 200 may be integrated into (i.e. attached to) the carpet tiles 100, but may in a variant also be separate from the carpet tile 100. In the former embodiment, it may be necessary to replace the whole carpet tile 100 when (one of) the) light source(s) 200 is out of order, whereas in the latter, the carpet tile 100 may be removed, the light source(s) 200 replaced and the carpet tile 100 again be placed in substantial its former position. Therefore, the invention also provides a method of replacing a light source 200 below a carpet tile 100 comprising:
- removing a light transmissive carpet tile 100 that was located on top of the light source 200 (or lighting system (see also below for the lighting system);
- replacing or repairing the light source 100 (or lighting system) that is located below the carpet tile 100; and
- (re-)installing a light transmissive carpet tile 100 over the light source 200 (or lighting system).

Fig. 2c schematically depicts a space 2, such as a room or shopping area or office area, etc., comprising a plurality of carpet tiles 100. In this way, a carpeted structure 300, here a carpeted floor, is provided. Under the plurality of arranged light tiles 100, a plurality of light sources 200 is arranged. This plurality of light sources 200 is an embodiment of a lighting system. The lighting system is indicated with reference 250. Preferably, the light sources 200 and/or the lighting system 250 have a maximum total height of 1 mm, such that it may be placed directly below the tile. In this case there will not be a visible height difference at the location of the lighting system. The carpeted structure 300 is further elucidated and described as carpeted floor 300.

In other embodiments the lighting system 250 may have more height. Such lighting system 250 may for instance be integrated in a padding. Hence, in such embodiment (not depicted in Fig. 2b), the carpeted floor 300 comprises a plurality of light transmissive multi-layer carpet tiles 100 and the lighting system 250 (comprising a plurality of light sources 200 (arranged on the floor 1)), wherein the lighting system 250 is optionally integrated in a padding. The plurality of light transmissive multi-layer carpet tiles 100 are arranged on the lighting system 250.

The carpeted floor 300 may be used to show decorative patterns in the space 2, but may also be used to provide information, such as by providing a light pattern containing information like arrows, commercial information, etc.

A person standing or walking on the carpet tiles 100 is preferably not able to see the floor 1 or lighting system 250 (when in an off state) from above through the tiles 100. This may especially be achieved through the relatively low transmission of not more than about 15%, preferably not more than about 10%, such as 5% or lower.

In a further embodiment the carpet tile 100 is used to make an emergency escape route lighting system that may be activated in case of an emergency. The embodiment comprises the lighting system 250 located on the floor 1. The lighting system 250 comprises a plurality of light sources 200, which may be connected with each other. Light transmissive carpet tiles 100 are used to cover the lighting system 250. The lighting system 250 may for example be in the shape of light spots, but may also be in the shape of arrows, to point into the right direction for escape. This arrow may also be made variable, such that the direction of the arrow may be changed depending on the location of the emergency. For example, the arrow may point away from a fire hazard. Instead of an arrow, also blinking lights may be used to point into a direction.

The carpeted floor 300 may further comprise a controller 50, which may be arranged external from the carpeted floor 300 (as depicted in Fig. 2c) but which may also be integrated in the carpeted floor 300. The controller 50 is especially arranged to control the lighting system 250, and more especially the individual light sources 200 of the lighting system 250. In this way, also information may be provided, like arrows indicating in a specific direction, commercial information. One or more of color, pattern shape, on/off state, output intensity, and information content of the carpet light 270 may be variable and may be controlled by the controller.

Further, one or more of color, pattern shape and information content of the carpet light 270 may be dependent on a sensor signal of a sensor (such as a touch or approach sensor or fire sensor or smoke sensor or thermal sensor, etc.) (not depicted), wherein the sensor is arranged to sense an object on or in the vicinity of the carpeted floor or is arranged to sense a feature selected from the group consisting of smoke and heat, and wherein the controller 50 is arranged to control one or more of color, on/off state, intensity, pattern shape and information content of the carpet light 270 in dependence of the sensor signal. Therefore, in yet another embodiment, the carpeted floor 300 further comprises a sensor, such as a touch or an approach sensor or a smoke sensor or a thermal sensor, etc., which may be arranged external from the carpeted floor 300 but which may also be integrated in the carpeted floor 300. The term sensor may also refer to a plurality of sensor. Such plurality of sensors may for instance be arranged to sense the same parameter (like touch of a user) at different locations, or to sense different parameters (like touch of a user and smoke, respectively).

In yet a further embodiment, the invention provides the carpeted floor 300 in combination with a sensor (not depicted) and the controller 50, wherein the sensor is arranged to provide a sensor signal when the sensor is approached or touched or when the sensor senses smoke or heat, and wherein the controller 50 is arranged to control one or more parameters selected from the group consisting of a lighting parameter (such as one or more of color, color distribution, light intensity, light intensity distribution, blinking frequency, etc.) of the carpet light 270, pattern shape of the carpet light 270, and information content provided by the carpet light 270. Patterns or information will in general be provided by a plurality of light sources 200.

In yet a further embodiment (not depicted), the carpeted floor 300 comprises a reflector, arranged to reflect the light source light 201 in a direction of the carpet top face 101. In this way, light outcoupling through the carpet tile 100 may be increased.

The carpeted structure 300, such as the carpeted floor 300, may comprises a plurality of tiles 100 that may be connected via electrical cables to the respective light sources 200. Further, they may be connected with data cables, etc. The carpeted floor 300 (or other carpeted structure) may in an embodiment be seen as a (carpeted) lighting unit comprising a plurality of tiles 100 and lighting system 250 comprising a plurality of light sources 200.

In the drawings, less relevant features like electrical cables, etc. have not been drawn for the sake of clarity.

The term "substantially" herein, such as in "substantially flat" or in "substantially consists", etc., will be understood by the person skilled in the art. In embodiments the adjective substantially may be removed. Where applicable, the term "substantially" may also include embodiments with "entirely", "completely", "all", etc. Where applicable, the term "substantially" may also relate to 90% or higher, such as 95% or higher, especially 99% or higher, even more especially 99.5% or higher, including 100%. The term "comprise" includes also embodiments wherein the term "comprises" means "consists of". Likewise, the term about may, where applicable, indicate a deviation of 10% or less, or 5% or less, or 1% or less, or 0.5% or less, or even 01.% or less, and also in an embodiment no (measureable) deviation. As will be clear to the person skilled in the art, small deviations from numerical values may, where applicable, in general be allowed. Hence, except for the values in the definition of about above, numerical values may, where applicable deviate a 10% or less, or 5% or less, or 1% or less, or 0.5% or less, or even 01.% or less from the given value. To stress this, herein sometimes the word "about" is used before numerical values.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices herein are amongst others described during operation. As will be clear to the person skilled in the art, the invention is not limited to methods of operation or devices in operation.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A light transmissive multi-layer carpet tile (100) having a carpet tile top face (101) and a carpet tile bottom face (102), the multi-layer carpet tile comprising:
a. a tufted primary backing layer (110) comprising the carpet tile top face (101) and a primary backing layer bottom face (112); and
b. a tile backing (130) comprising the carpet tile bottom face (102),
**characterized in that** the multi-layer carpet tile (100) further comprises:
- a pre-coat layer (120), attached to the primary backing layer bottom face (112), the tile backing (130) being attached to the pre-coat layer (120); and
- a light transmissive carpet tile section (104) having a carpet tile light transmission in the range of 0.5-15 % for light (201) propagating in a direction from the tile backing (130) to the carpet tile top face (101) and having a wavelength in the visible range.

2. The light transmissive multi-layer carpet tile (100) according to claim 1, wherein the tile backing (130) comprises a recess (140) arranged to be able to at least partially enclose a light source (200).

3. The light transmissive multi-layer carpet tile (100) according to any one of the preceding claims, comprising a light source (200), preferably a light emitting diode (LED).

4. The light transmissive multi-layer carpet tile (100) according to any one of the preceding claims, wherein the pre-coat layer (120) comprises a material selected from the group consisting of a latex, an acrylic, and a transmissive polyolefin dispersion based layer.

5. The light transmissive multi-layer carpet tile (100) according to any one of the preceding claims, wherein the tile backing (130) comprises a material selected from the group consisting oftransmissive poly(vinyl chloride), poly(vinyl butyral), silicone rubber, poly(methyl methacrylate), polypropylene and polyethylene.

6. The light transmissive multi-layer carpet tile (100) according to any one of the preceding claims, wherein the tile backing (130) comprises an olefine.

7. The light transmissive multi-layer carpet tile (100) according to any one of the preceding claims, wherein the tile backing (130) further comprises a scrim (135).

8. The light transmissive multi-layer carpet tile (100) according to any one of the preceding claims, wherein the light transmissive carpet tile section (104) has a carpet tile light transmission in the range of 1-10 %

9. A carpet structure (300) comprising a plurality of light transmissive multi-layer carpet tiles (100) according to any one of the preceding claims.

10. The carpet structure (300) according to claim 9, comprising a lighting system (250) comprising a plurality of light sources (200), wherein the plurality of light transmissive multi-layer carpet tiles (100) are arranged on the lighting system (250).

11. The carpet structure (300) according to any one of claims 9-10, wherein the light transmissive multi-layer carpet tiles (100) are free from recesses (140) according to claim 2.

12. The carpet structure (300) according to claim 10, wherein the light sources (200) have a total height equal to or less than 1 mm, and wherein the carpeted structure (300) does not comprise a padding.

13. The carpeted structure (300) according to claim 10, wherein the lighting system (250) is comprised in a padding.

14. Use of a carpeted structure (300) comprising a lighting system (250) having a plurality of light sources (200), and a plurality of light transmissive multi-layer carpet tiles (100) according to any one of claims 1-9, arranged on the lighting system (250), to provide carpet light (270).

15. Use according to claim 14, to provide information with carpet light (270).

## Patentansprüche

1. Lichtdurchlässige Mehrschicht-Teppichfliese (100) mit einer Teppichfliesenoberseite (101) und einer Teppichfliesenunterseite (102), wobei die Mehrschicht-Teppichfliese umfasst:
a. eine getuftete primäre Trägerschicht (110), die die Teppichfliesenoberseite (101 und eine Unterseite (112) der primären Trägerschicht aufweist; sowie
b. einen Fliesenrücken (130), der die Teppichfliesenunterseite (102) aufweist,
**dadurch gekennzeichnet, dass** die Mehrschicht-Teppichfliese (100) weiterhin umfasst:
- eine Precoat-Schicht (120), die an der Unterseite (112) der primären Trägerschicht befestigt ist, wobei der Fliesenrücken (130) an der Precoat-Schicht (120) befestigt ist; sowie
- einen lichtdurchlässigen Teppichfliesenabschnitt (104), der eine Lichtdurchlässigkeit der Teppichfliese im Bereich von 0,5-15 % für Licht (201) aufweist, das sich in einer Richtung von dem Fliesenrücken (130) zu der Teppichfliesenoberseite (101) ausbreitet und eine Wellenlänge in dem sichtbaren Bereich hat.

2. Lichtdurchlässige Mehrschicht-Teppichfliese (100) nach Anspruch 1, wobei der Fliesenrücken (130) eine Ausnehmung (140) umfasst, die so angeordnet ist, dass sie zumindest teilweise eine Lichtquelle (200) umschließen kann.

3. Lichtdurchlässige Mehrschicht-Teppichfliese (100) nach einem der vorangegangenen Ansprüche, mit einer Lichtquelle (200), vorzugsweise einer Licht emittierenden Diode (LED).

4. Lichtdurchlässige Mehrschicht-Teppichfliese (100) nach einem der vorangegangenen Ansprüche, wobei die Precoat-Schicht (120) ein Material aufweist, das aus der Gruppe, bestehend aus einer Latex-, einer Acryl- und einer auf einer transmissiven Polyolefin-Dispersion basierenden Schicht, ausgewählt wird.

5. Lichtdurchlässige Mehrschicht-Teppichfliese (100) nach einem der vorangegangenen Ansprüche, wobei der Fliesenrücken (130) ein Material umfasst, das aus der Gruppe, bestehend aus transmissivem Poly(vinylchlorid), Poly(vinylbutyral), Siliconkautschuk, Poly(methylmethacrylat), Polypropylen und Polyethylen, ausgewählt wird.

6. Lichtdurchlässige Mehrschicht-Teppichfliese (100) nach einem der vorangegangenen Ansprüche, wobei der Fliesenrücken (130) ein Olefin umfasst.

7. Lichtdurchlässige Mehrschicht-Teppichfliese (100) nach einem der vorangegangenen Ansprüche, wobei der Fliesenrücken (130) weiterhin ein Gittergewebe (135)
umfasst.

8. Lichtdurchlässige Mehrschicht-Teppichfliese (100) nach einem der vorangegangenen Ansprüche,, wobei der lichtdurchlässige Teppichfliesenabschnitt (104) eine Teppichfliesen-Lichtdurchlässigkeit im Bereich von 1-10 % aufweist.

9. Teppichstruktur (300) mit mehreren lichtdurchlässigen Mehrschicht-Teppichfliesen (100) nach einem der vorangegangenen Ansprüche.

10. Teppichstruktur (300) nach Anspruch 9, mit einem Beleuchtungssystem (250), das eine Mehrzahl von Lichtquellen (200) umfasst, wobei die Mehrzahl von lichtdurchlässigen Mehrschicht-Teppichfliesen (100) auf dem Beleuchtungssystem (250) angeordnet ist.

11. Teppichstruktur (300) nach einem der Ansprüche 9-10, wobei die lichtdurchlässigen Mehrschicht-Teppichfliesen (100) frei von Ausnehmungen (140) nach Anspruch 2 sind.

12. Teppichstruktur (300) nach Anspruch 10, wobei die Lichtquellen (200) eine Gesamthöhe gleich oder geringer als 1 mm aufweisen, und wobei die Teppichstruktur (300) keine Polsterung umfasst.

13. Teppichstruktur (300) nach Anspruch 10, wobei das Beleuchtungssystem (250) in einer Polsterung enthalten ist.

14. Verwendung einer Teppichstruktur (300) mit einem Beleuchtungssystem (250), das eine Mehrzahl von Lichtquellen (200) sowie eine Mehrzahl von lichtdurchlässigen Mehrschicht-Teppichfliesen (100) nach einem der Ansprüche 1-9 aufweist, die auf dem Beleuchtungssystem (250) angeordnet sind, um Teppichlicht (270) vorzusehen.

15. Verwendung nach Anspruch 14, um Informationen mit Teppichlicht (270) vorzusehen.

## Revendications

1. Carreau de moquette à couches multiples à transmission de lumière (100) comportant une face supérieure de carreau de moquette (101) et une face inférieure de carreau de moquette (102), le carreau de moquette à couches multiples comprenant :
a. une couche de support primaire touffetée (110) comprenant la face supérieure de carreau de moquette (101) et une face inférieure de couche de support primaire (112) ; et
b. un support de carreau (130) comprenant la face inférieure de carreau de moquette (102),
**caractérisé en ce que** le carreau de moquette à couches multiples (100) comprend en outre :
- une couche de revêtement préalable (120), attachée à la face inférieure de couche de support primaire (112), le support de carreau (130) étant attaché à la couche de revêtement préalable (120) ; et
- une section de carreau de moquette à transmission de lumière (104) comportant une transmission de lumière de carreau de moquette dans la plage de 0,5 à 15% pour de la lumière (201) se propageant dans une direction du support de carreau (130) à la face supérieure de carreau de moquette (101) et possédant une longueur d'onde dans la plage visible.

2. Carreau de moquette à couches multiples à transmission de lumière (100) selon la revendication 1, dans lequel le support de carreau (130) comprend un évidement (140) agencé pour pouvoir au moins partiellement enfermer une source lumineuse (200).

3. Carreau de moquette à couches multiples à transmission de lumière (100) selon une quelconque des revendications précédentes, comprenant une source lumineuse (200), de préférence une diode électroluminescente (LED).

4. Carreau de moquette à couches multiples à transmission de lumière (100) selon une quelconque des revendications précédentes, dans lequel la couche de revêtement préalable (120) comprend un matériau sélectionné parmi le groupe constitué d'un latex, d'un acrylique, et d'une couche à base de dispersion de polyoléfine à transmission.

5. Carreau de moquette à couches multiples à transmission de lumière (100) selon une quelconque des revendications précédentes, dans lequel le support de carreau (130) comprend un matériau sélectionné parmi le groupe constitué de poly(chlorure de vinyle), de poly(butyral de vinyle), de caoutchouc de silicone, de poly(méthacrylate de méthyle), de polypropylène et de polyéthylène à transmission.

6. Carreau de moquette à couches multiples à transmission de lumière (100) selon une quelconque des revendications précédentes, dans lequel le support de carreau (130) comprend une oléfine.

7. Carreau de moquette à couches multiples à transmission de lumière (100) selon une quelconque des revendications précédentes, dans lequel le support de carreau (130) comprend en outre un canevas (135).

8. Carreau de moquette à couches multiples à transmission de lumière (100) selon une quelconque des revendications précédentes, dans lequel la section de carreau de moquette à transmission de lumière (104) possède une transmission de lumière de carreau de moquette dans la plage de 1 à 10%.

9. Structure de moquette (300) comprenant une pluralité de carreaux de moquette à couches multiples à transmission de lumière (100) selon une quelconque des revendications précédentes.

10. Structure de moquette (300) selon la revendication 9, comprenant un système d'éclairage (250) comprenant une pluralité de sources lumineuses (200), dans laquelle la pluralité de carreaux de moquette à couches multiples à transmission de lumière (100) sont agencés sur le système d'éclairage (250).

11. Structure de moquette (300) selon une quelconque des revendications 9 à 10, dans laquelle les carreaux de moquette à couches multiples à transmission de lumière (100) sont dépourvus d'évidements (140) selon la revendication 2.

12. Structure de moquette (300) selon la revendication 10, dans laquelle les sources lumineuses (200) possèdent une hauteur totale égale ou inférieure à 1 mm, et dans laquelle la structure de moquette (300) ne comprend pas de matelassage.

13. Structure de moquette (300) selon la revendication 10, dans laquelle le système d'éclairage (250) est compris dans un matelassage.

14. Utilisation d'une structure de moquette (300) comprenant un système d'éclairage (250) comportant une pluralité de sources lumineuses (200), et une pluralité de carreaux de moquette à couches multiples à transmission de lumière (100) selon une quelconque des revendications 1 à 9, agencés sur le système d'éclairage (250), pour fournir une lumière de moquette (270).

15. Utilisation selon la revendication 14, pour fournir des informations avec la lumière de moquette (270).
